# EUROPÄISCHE PATENTSCHRIFT

(11) **EP 2 070 673 B1**
(45) Veröffentlichungstag und Bekanntmachung des Hinweises auf die Patenterteilung: **27.06.2012**
(21) Anmeldenummer: 08075940.0
(22) Anmeldetag: 12.12.2008
(51) Int. Cl.: B28C 5/38, B28C 7/04, B01F 5/10, B01F 7/00, C04B 40/00

(54) **System und Verfahren zum Durchmischen von Baumaterial**
System and method for mixing building materials
Système et procédé pour mélanger des matériaux de construction

(30) Priorität: 12.12.2007 DE 102007060455
(43) Veröffentlichungstag der Anmeldung: 17.06.2009
(73) Patentinhaber: Deutsche Amphibolin-Werke von Robert Murjahn Stiftung & Co KG, 64372 Ober-Ramstadt (DE)
(72) Erfinder: Jager, Jürgen, Dr., 65396 Walluf (DE)
(74) Vertreter: Pfenning, Meinig & Partner GbR

(56) Entgegenhaltungen:
- EP-A2- 1 616 683
- EP-A2- 1 710 064
- WO-A1-2005/065906
- WO-A2-2006/043265
- DE-U1- 20 112 245
- GB-A- 2 194 528

## Beschreibung

Gegenstand der Erfindung ist ein System mit den Merkmalen des Oberbegriffs des Anspruchs 1 und ein Verfahren zum Beimischen von Zusatzstoffen nach Anspruch 8.

Pastöses, erstarrungsfähiges Baumaterial wie beispielsweise Mörtel zum Befestigen von Wärmedämmverbundsystemen (WDVS) wird in der Bauindustrie in großen Mengen eingesetzt. Der Mörtel wird dabei aus einer pulverförmigen oder pastenförmigen Substanz in Verbindung mit Wasser hergestellt. Das fertige pastöse erstarrungsfähige Baumaterial wird anschließend in einem Trog gelagert, wobei der Trog eine Beschickungsöffnung zum Einfüllen des Mörtels und eine Ausgabeöffnung aufweist, aus welcher der Mörtel entnommen werden kann. Zumeist ist in oder an dem Trog eine Fördereinrichtung angebracht, welche den bereits fertig gemischten Mörtel insbesondere in der Nähe der Ausgabeöffnung in Bewegung hält und einen leichten Druck erzeugt, so dass der Mörtel aus der Ausgabeöffnung hinausgedrückt wird.

Gewöhnliche Baumaschinen, welchen mittels zum Teil aufwendiger Konstruktionen Zusatzstoffe beigemengt werden können, sind beispielsweise aus der DE 201 12 245 U1 oder der DD 2774 31 A1 bekannt.

Die Druckschrift DE 201 12 245 U1 offenbart ein System zur Aufnahme und Abgabe von pastösem erstarrungsfähigen Baumaterial gemäß dem Oberbegriff des Anspruchs 1 und ein Verfahren zum Beimischen von ersten und zweiten Zusatzstoffen zu einem pastösem, erstarrungsfähigen Baumaterial, wobei das Baumaterial in einer Vorrichtung mit einem Trog vorgehalten ist, wobei der Trog eine Beschickungsöffnung und eine Ausgabeöffnung aufweist und der Trog eine Fördervorrichtung zur Ausgabe des Baumaterials aus der Ausgabeöffnung umfasst, welches folgende Schritte beinhaltet:
a) Verbinden einer ersten Materialleitung mit der Ausgabeöffnung und der Beschickungsöffnung;
b) Betrieb der Fördervorrichtung und Zugabe eines ersten Zusatzstoffes zum Baumaterial über die Beschickungsöffnung, wobei das Baumaterial von der Ausgabeöffnung zur Beschickungsöffnung befördert wird.

Eine weitere Vorrichtung zum Beimengen eines verflüssigten Zusatzstoffes in Form eines Beschleunigers ist aus der WO 2005/065906 A1 bekannt.

Da auf den wenigsten Baustellen rund um die Uhr gearbeitet wird bzw. größere Pausen zwischen verschiedenen Arbeitsgängen auftreten, bei welchen der Mörtel benutzt wird, muss dafür Sorge getragen werden, dass das pastöse erstarrungsfähige Baumaterial nicht frühzeitig erstarrt. Um dies zu verhindern, werden zu verschiedenen Stadien des Baumaterials ein Retardierer oder auch Verzögerer zu dem pastösen erstarrungsfähigen Baumaterial oder einem seiner Komponenten hinzugegeben. So offenbart die EP 1 710 064 A2 ein Verfahren zum Beimischen eines Zusatzstoffes, welcher zum Wasser hinzugegeben wird, wobei das Wasser anschließend mit dem pulverförmigen Mörtelgrundstoff gemischt wird. Der daraus resultierende Mörtel weist dann den Verzögerer auf. Die Druckschrift DE 101 09 841 C2 offenbart ein Verfahren, bei welchem dem Trockenmörtel Abbindeverzögerer zugesetzt werden, welche zusammen mit dem anschließend mit Wasser kombinierten pulverförmigen Mörtelgrundstoff einen angemischten Mörtel ergeben, welcher mit einem Verzögerer versetzt ist. Eine weitere Alternative ist in der Druckschrift GB 2194528 A beschrieben, bei welcher der Verzögerer dem pastösen erstarrungsfähigen Baumaterial erst dann zugesetzt wird, wenn dieses bereits fertig aus den Grundkomponenten hergestellt ist.

Nachteile der beiden erstgenannten Alternativen, bei welchen die Zusatzstoffe den Komponenten des pastösen erstarrungsfähigen Baumaterials beigemischt werden, sind darin zu finden, dass diese recht aufwendige Gerätschaften voraussetzen, um die Verfahren durchführen zu können. Das letztgenannte Verfahren kann beinahe zu allen bereits sich im Einsatz befindlichen Mischtrögen durchgeführt werden, setzt jedoch den Einsatz von Muskelkraft oder starken "Rührstäben" zum Untermischen des Zusatzstoffes voraus.

Aufgabe der vorliegenden Erfindung ist es, ein System zu schaffen, welche mit relativ einfachen konstruktiven Veränderungen an bereits bestehenden Mischtrögen eingesetzt und einfach durchgeführt werden kann und zudem eine weitere Verwendung des Baumaterials ermöglichen.

Die Aufgabe wird gelöst durch ein System mit den Merkmalen des Anspruchs 1 bzw. mit einem Verfahren mit den Merkmalen des Anspruchs 8. Weitere vorteilhafte Weiterbildungen des Systems bzw. des Verfahrens sind in den untergeordneten Ansprüchen zu finden.

Das erfindungsgemäße System zur Aufnahme und Abgabe von pastösem erstarrungsfähigem Baumaterial weist einen Trog mit einer Ausgabeöffnung und einer Beschickungsöffnung zum Befüllen des Trogs mit Baumaterial auf. Des Weiteren ist eine Fördervorrichtung zur Ausgabe des Baumaterials aus der Ausgabeöffnung vorhanden. Die Beschickungsöffnung ist zudem mit einer Abgabevorrichtung zur Abgabe eines Zusatzstoffs verbindbar.

Es ist mindestens eine erste Materialleitung vorhanden, welche ein ableitendes und ein zuleitendes Ende besitzt, wobei das ableitende Ende mit der Ausgabeöffnung lösbar verbunden ist und das zuleitende Ende der ersten Materialleitung mit der Beschickungsöffnung verbindbar ist. Auf diese Weise wird ein Baumaterialkreislauf hergestellt, welcher hervorragend dazu geeignet ist, das pastöse erstarrungsfähige Baumaterial zu durchmischen. Hierzu ist gegenüber handelsüblichen Systemen zur Aufnahme und Abgabe von pastösem erstarrungsfähigem Baumaterial lediglich die erste Materialleitung notwendig, welche das Material nicht zum Verarbeiten ausgibt, sondern die Ausgabe zurück in den Trog veranlasst. Durch die Zugabe eines Zusatzstoffs wird somit die Möglichkeit zu einer sehr guten Durchmischung des Baumaterials mit dem Zusatzstoff erreicht.

Ferner umfasst das System eine erste und eine zweite Abgabevorrichtung, wobei die erste Abgabevorrichtung einen Retardierer als ersten Zusatzstoff und die zweite Abgabevorrichtung einen Beschleuniger als zweiten Zusatzstoff aufweist. Die erste und die zweite Abgabevorrichtung sind alternierend mit der Beschickungsöffnung verbunden, so dass der erste bzw. zweite Zusatzstoff dem Baumaterial beigemengt wird.

Bei dem pastösen erstarrungsfähigen Baumaterial handelt es sich vorzugsweise um ein Gemisch aus Zement und Wasser, wobei zusätzlich Calciumhydroxid und/oder Verdickungsmittel und/oder Styroporpartikel hinzugefügt sein kann. Des Weiteren können Sand, Stein oder Asche beigemischt sein.

Durch die Zugabe eines Retardierers ist es möglich, das Abbinden und darauf folgende Erstarren des Baumaterials hinauszuzögern. Durch die Zugabe des Beschleunigers ist es möglich, dass mit dem Retardierer versetzte Baumaterial, in seinen Ausgangszustand zu versetzen, d.h. die Abbinde-Eigenschaften des Baumaterials in den Zustand vor der Zugabe des Retardierers zu versetzen. Hierdurch kann das Baumaterial wieder wie gewohnt verarbeitet werden und eine zwischenzeitige Reinigung des Troges, in welchem sich das Baumaterial befindet, ist nicht notwendig.

Es ist eine gute Durchmischung des jeweiligen Zusatzstoffes mit dem pastösen Baumaterial nötig. Dabei wird das Baumaterial so lange im Kreislauf gehalten, bis von einer nahezu homogenen Durchmischung von Baumaterial und Zusatzstoff ausgegangen werden kann. Dies ist abhängig von der Art des Baumaterials, der Art des Zusatzstoffs und äußeren Bedingungen wie Temperatur oder Luftfeuchtigkeit. Derartige Retardierer und Beschleuniger sind im Stand der Technik ausführlich beschrieben.

Geeignete Retardierer sind beispielsweise Hydroxy- oder Polyhydroxycarbonsäuren, sowie deren Salze. Weiterhin kommen Saccharosen und deren Derivate oder Spaltprodukte zum Einsatz.

Geeignete Beschleuniger sind beispielsweise verdünnte Natron- oder Kaliumlauge oder Calcium basierte Chloride oder Laktate, oder Kaliwasserglas, Natronwasserglas oder Mischwassergläserzusätze. Weiterhin geeignet sind Natriumsulfate, Eisensulfate, und weitere aus dem Stand der Technik bekannte Substanzen. Anstelle der Sulfate werden auch die Phosphate (z. Natriumphosphate, Eisenphosphate und/oder Mischsalze der Metalle eingesetzt.

Durch die Zugabe eines Retardierers oder Beschleunigers kann also die Verweilzeit des Baumaterials aktiv beeinflusst werden, was auf Baustellen von großer Wichtigkeit ist. Weiterhin können jedoch auch andere Zusatzstoffe wie Farben zugesetzt werden.

Das zuzugebende Zusatzmittel kann einen Massenanteil oder Volumenanteil des Gemisches aus pastösem erstarrungsfähigem Baumaterial und Zusatzmittels von 0,05% bis 5%, vorzugsweise 0,05% bis 2%, besonders vorzugsweise 0,05% bis 0,5% bilden.

Vorteilhafterweise ist eine zweite Materialleitung vorhanden, welche ebenfalls ein ableitendes und ein zuleitendes Ende besitzt, wobei das ableitende Ende mit der Abgabevorrichtung und das zuleitende Ende mit der Beschickungsöffnung verbindbar ist. Mittels der zweiten Materialleitung ist die Dosierung der Zusatzstoffe durch die Beschickungsöffnung besser und verlässlicher durchführbar. Hierbei ist es besonders vorteilhaft, wenn die zweite Materialleitung eine Dosierleitung und eine Dosierpumpe aufweist. Auf diese Weise wird eine besonders zuverlässige und einstellbare bzw. programmierbare Dosierung der Zusatzstoffe ermöglicht. Hierbei kann auf handelsübliche Dosierpumpen und Dosierschläuche als zweite Materialleitung zurückgegriffen werden.

Ebenso ist es vorteilhaft, wenn die Abgabevorrichtung zur Abgabe eines Zusatzstoffes ein Einwegbehälter ist, welcher mit dem jeweiligen Zusatzstoff gefüllt sein kann. Dieser Einwegbeutel wird mit der zweiten Materialleitung lösbar verbunden, so dass diese einfach miteinander in Wirkverbindung gebracht werden können. Auf diese Weise ist die absolut beifügbare Menge an Zusatzstoff durch das Fassungsvolumen des Einwegbeutels begrenzt, was die Handhabung für den Betreiber wesentlich vereinfacht. Dabei ist es ebenso vorteilhaft, wenn der Einwegbehälter mit der zweiten Materialleitung derart verbindbar ist, dass beim erstmaligen Verbinden eine an dem Einwegbehälter befestigte Membran oder Ventilvorrichtung durchstoßen wird und anschließend der in dem Einwegbehälter befindliche Zusatzstoff in die zweite Materialleitung einlaufen kann.

Eine besonders vorteilhafte Weiterbildung des Systems ist es, wenn der Trog einen Deckel zur Abdeckung der Beschickungsöffnung aufweist und der Deckel lösbar mit dem Trog verbunden ist. Der Deckel ist dazu geeignet, eine Ausdünstung der wässrigen Inhaltsstoffe des pastösen erstarrungsfähigen Baumaterials zu ermöglichen. Die zweite Öffnung des Deckels ist mit dem zuleitenden Ende der zweiten Materialleitung verbunden, und der Zusatzstoff kann so in die Beschickungsöffnung gegeben und letztendlich dem pastösen erstarrungsfähigen Baumaterial beigemengt werden. Mittels eines derartigen Deckels bietet sich die Möglichkeit, ein schnelles Austrocknen des Baumaterials zu verhindern und gleichzeitig eine Vielzahl von Ventilen oder Kupplungen an den Öffnungen anzubringen, so dass der Gesamtaufbau des Systems insbesondere beim Aufbauen und Abbauen vereinfacht wird, da alle wesentlichen Bestandteile an dem Deckel befestigbar sind.

Hierbei ist es besonders vorteilhaft, wenn der Deckel eine Dichtung aufweist oder mit einer Dichtung verbindbar ist und so die Beschickungsöffnung des Trogs abdichtet. Dies verhindert die Austrocknung des Baumaterials.

Weiterhin ist es vorteilhaft, wenn die erste Materialleitung eine Kupplung aufweist oder mit einer Kupplung verbindbar ist, da so eine einfachere Handhabung zur Herstellung des Baumaterialkreislaufs möglich wird. Hierbei kann die Kupplung entweder an der Materialleitung oder an der Fördereinrichtung für das Baumaterial oder an dem Trog angebracht sein. Es ist ebenfalls denkbar, dass als Kupplung ein derartiger Typ gewählt wird, mit welchem die Fördereinrichtung oder der Trog normalerweise mit weiteren Gerätschaften verbindbar ist.

Weitere vorteilhafte Weiterbildungen lassen sich den weiteren Systemansprüchen entnehmen.

Das erfindungsgemäße Verfahren zum Beimischen von Zusatzstoffen zu einem pastösen erstarrungsfähigen Baumaterial, wobei das Baumaterial in einer Vorrichtung mit einem Trog vorgehalten ist, wobei der Trog eine Beschickungsöffnung und eine Ausgabeöffnung aufweist und eine Fördervorrichtung zur Ausgabe des Baumaterials aus der Ausgabeöffnung umfasst, umfasst die nachfolgenden Schritte:
Zuerst wird eine erste Materialleitung mit der Ausgabeöffnung und der Beschickungsöffnung verbunden. Auf diese Weise wird ein Kreislauffluss des Baumaterials von der Ausgabeöffnung zur Beschickungsöffnung ermöglicht. Anschließend wird die Fördervorrichtung in Betrieb genommen, so dass das Baumaterial von der Ausgabeöffnung durch die erste Materialleitung zurück zur Beschickungsöffnung gepumpt wird. Zudem wird dem Baumaterial ein Retardierer als erster Zusatzstoff beigegeben, wobei die Beigabe über die Beschickungsöffnung vorgenommen wird. Anschließend wird die Fördervorrichtung vorzugsweise ausgeschaltet und das mit dem ersten Zusatzstoff versehene Baumaterial ruht im Trog.

Anschließend wird dem mit dem erstens Zusatzstoff versetzten Baumaterial ein Beschleuniger als zweiter Zusatzstoff beigemengt, welcher bewirkt, dass die Abbinde-Eigenschaften des Baumaterials im Wesentlichen in den Zustand vor der Beimengung des ersten Zusatzstoffs zurückversetzt werden.

Die Vorteile des erfindungsgemäßen Verfahrens liegen darin begründet, dass die Durchmischung mittels eines Kreislaufsystems herbeigeführt wird, wobei auf eine bereits vorhandene Fördervorrichtung am Trog zurückgegriffen wird und somit keine weitere maschinelle Ergänzung zu bereits vorhandenem Gerät notwendig ist.

Zudem erspart sich der Betreiber oder Benutzer eine Reinigung des Trogs, und verschwendet kein einmal angesetztes Baumaterial. Somit führt das Verfahren zu einer Produktivitätssteigerung.

Vorteilhafterweise wird bei dem Verfahren ebenso ein Deckel mit mindestens einer ersten und ein zweiten Öffnung eingesetzt, welcher vorzugsweise die Beschickungsöffnung dichtend abdeckt und bei dem die erste Materialleitung über die erste Öffnung mit der Beschickungsöffnung verbunden wird und eine zweite Materialleitung mit der zweiten Öffnung und einer Abgabevorrichtung zur Abgabe des Zusatzstoffes verbunden wird. Diese Arbeitsschritte werden vorzugsweise vor dem Betrieb der Fördervorrichtung und der Zugabe des Zusatzstoffes vorgenommen.

Besonders vorzugsweise weist die zweite Materialleitung eine Dosierleitung und eine Dosierpumpe auf, wobei die Zugabe des Zusatzstoffes durch die Dosierpumpe gesteuert wird. Hierbei kann auf bereits handelsverfügbare Dosierpumpen zurückgegriffen werden, welche vorzugsweise mit dem Deckel verbunden werden können.

Weitere vorteilhafte Weiterbildungen des Verfahrens lassen sich den weiteren untergeordneten Verfahrensansprüchen entnehmen.

Im Folgenden soll die Erfindung anhand einiger Figuren näher erläutert werden. Es zeigen:
- Fig. 1: Befüllung des Trogs mit pastösem erstar- rungsfähigem Baumaterial;
- Fig. 2: Erfindungsgemäßes System zum Durchmischen von pastösem erstarrungsfähigem Baumateri- al;
- Fig. 3: Alternative Ausführung einer erfindungsge- mäßen Vorrichtung für ein System.

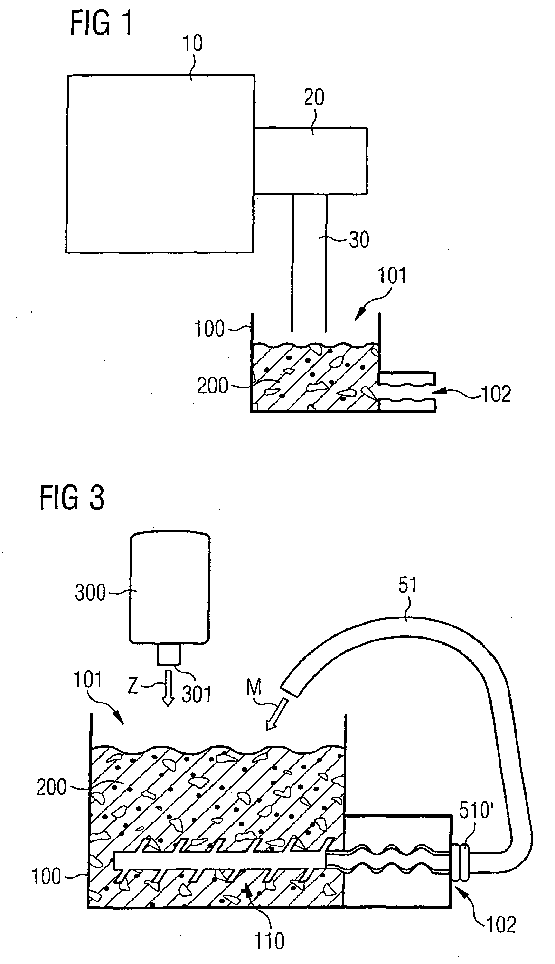

Die Fig. 1 zeigt einen Behälter zur Aufbewahrung von Trockenmörtel 10, wie er z. B. durch die Caparol One-Way-Box begründet ist. Der in dem Behälter 10 angeordnete Trockenmörtel wird mit einer Flüssigkeit wie beispielsweise Wasser vermengt und in einem Mörtelmischer 20, z. B. Capa-M, zu einer fertigen auftragungsfähigen Mörtelsubstanz durchmischt. Dabei ist der Mörtel ein pastöses erstarrungsfähiges Baumaterial. Nach der Durchmischung im Mörtelmischer 20 fällt der fertige Mörtel durch ein Rohr 30 in den Trog 100, wobei der fertig gemischte Mörtel 200 über die Beschickungsöffnung 101 in den Trog Einlass erhält. Zu einer späteren Verarbeitung wird der Mörtel 200 über die Ausgabeöffnung 102 direkt zur Verarbeitung ausgegeben oder an ein weiteres Gerät übergeben. Der hier gezeigte schematische Aufbau ist derjenige, wie er beim täglichen Baubetrieb gewöhnlicherweise durchgeführt wird.

Gegen Betriebsschluss oder bei Verlegen der Gerätschaften soll der im Trog 100 bereits fertig angemischte Mörtel nicht abgelassen oder verschwendet werden, sondern so lange am Abbinden gehindert werden, bis er wieder an anderem Ort oder zu anderer Zeit verwendet wird. Hierzu wird dem angemischten Mörtel zunächst ein Retardierer als erster Zusatzstoff beigemengt, indem der Retardierer durch die Beschickungsöffnung 101 eingefüllt und mit dem Mörtel durchmischt wird. Zum Zeitpunkt der Wiederverwendung des Mörtels wird dem mit dem Retardierer versetzten Mörtel ein Beschleuniger durch die Beschickungsöffnung beigemengt und vermischt, wobei der Beschleuniger die Abbinde-Eigenschaften des Mörtel in den Zustand vor der Zugabe des Retardierers zurückversetzt.

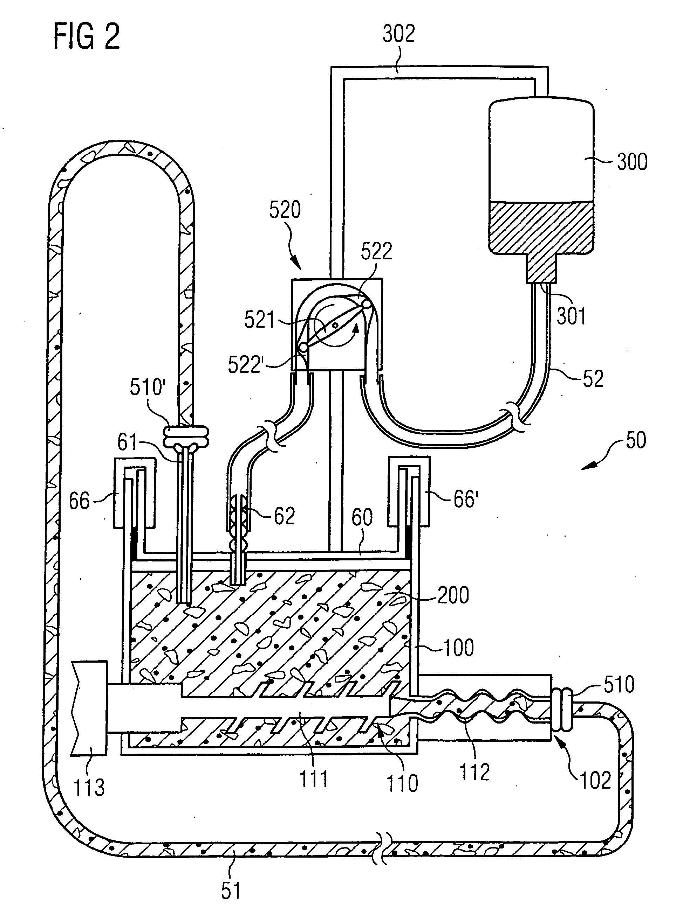

Zu diesem Zweck wird der Trog 100 mit weiteren Komponenten ausgestattet, um ein Durchmischen des Mörtels mit einem Retardierer oder Beschleuniger zu ermöglichen. Fig. 2 zeigt eine derartige Vorrichtung 50. Gezeigt sind der Trog 100 mit der Beschickungsöffnung 101 und der Ausgabeöffnung 102 und der Mörtel 200. Des Weiteren ist eine Fördervorrichtung 110 mit einer Mischwelle 111 gezeigt, welche in eine Schneckenpumpe 112 übergeht. Die Fördervorrichtung wird über einen Antrieb 113 maschinell betrieben.

Die Ausgabeöffnung 102 ist mit einer ersten Materialleitung 51 mittels einer Kupplung 510 verbunden. Die erste Materialleitung 51 besteht dabei aus einem Schlauch, welcher einen Durchmesser von 15 - 50 mm, vorzugsweise von 15 - 30 mm aufweist und eine Länge zwischen 5 und 70 m besitzt. Als Material kommen handelsübliche Kunststoffe in Frage. Die Kupplung 510 und eine korrespondierende Kupplung 510', mit welcher die erste Materialleitung 51 mit der ersten Öffnung 61 des Deckels 60 verbunden ist, sind dabei als GK-Kupplungen ausgebildet. Bei Betrieb der Fördervorrichtung 110 wird der Mörtel 200 durch den Schneckenpumpenabschnitt 112 in die erste Materialleitung 51 gepumpt und fällt anschließend durch die erste Öffnung 61 des Deckels 60 in die Beschickungsöffnung 101 und somit wieder in den Trog 100. Der Deckel 60 weist außer der ersten Öffnung 61 eine zweite Öffnung 62 auf. Dabei kann sowohl die erste als auch die zweite Öffnung mit Düsen zur Ausgabe von Material bzw. Stopfen versehen sein, auf welchen die erste oder die zweite Materialleitung angeordnet werden kann. Im Falle der ersten Öffnung 61 ist diese als Pfropfen mit einer zur Kupplung 510' der ersten Materialleitung 51 korrespondierenden Kupplung ausgestattet. Der Deckel 60 ist so geformt, dass er die Beschickungsöffnung 101 im Wesentlichen abdeckt. Als Material kommt ein Metall, wie Stahl oder Aluminium, oder ein robuster Kunststoff in Frage.

Um eine bessere Dichtung zu erreichen, sind Dichtkappen 66 bzw. 66' vorhanden, wobei diese einstückig ausgebildet sein können, was im vorliegenden Falle bedeuten würde, dass die Elemente 66 und 66' als Teil einer einzigen Dichtung zu betrachten sind; die beiden Teile sind nur aufgrund der Querschnittsperspektive sichtbar.

Die Vorrichtung 50 weist weiterhin eine zweite Materialleitung 52 auf, welche mit einer Abgabevorrichtung 300 über eine Kupplung 301 verbunden ist. Des Weiteren ist ein Ständer 302 zu sehen, an welchem die Abgabevorrichtung 300 befestigt ist. Dabei kann der Ständer 302 entweder auf dem Boden stehend oder mit dem Deckel verbunden sein. Die zweite Materialleitung 52 ist im vorliegenden Fall ein Schlauch, insbesondere ein Dosierschlauch. Der Schlauch oder Dosierschlauch weist hierbei vorzugsweise einen Durchmesser von 2 - 15 mm, besonders vorzugsweise zwischen 3 und 8 mm auf. Die zweite Materialleitung 52 ist mit einer Dosierpumpe 520 in Kontakt, wobei es sich in diesem Fall um eine Dosierschlauchpumpe handelt. Zu sehen ist der Arm 521 der Dosierschlauchpumpe, welcher die zweite Materialleitung 52 im Bereich des Arms 521 umlaufend in ihrem Durchmesser verkleinert, wie durch die Eindellungen 522, 522' sichtbar ist.

Die Dosierpumpe 520 kann alternativ direkt am Deckel 60 befestigt werden, so dass alle wesentlichen Elemente, welche zum Durchmischen und Beimischen des Baumaterials bzw. des Zusatzstoffs verwendet werden, an dem Deckel befestigt sind. Auf diese Weise könnte der Deckel beispielsweise als eigenständige Einheit aufbewahrt und vor Beendigung der Arbeitszeit auf den Trog 100 aufgesetzt werden bzw. vor Wiederaufnahme der Tätigkeit wieder abgenommen werden, wobei anschließend nur noch die erste Materialleitung 51 mittels der Ausgabeöffnung 102 verbunden werden muss.

Die Abgabevorrichtung 300 ist im vorliegenden Falle ein Einwegbehälter in Form eines Plastikbeutels mit einem Retardierer bzw. einem Beschleuniger. Hierbei ist eine ähnliche Aufhängung und ähnliche Verbindung mit dem Dosierschlauch wie bei einem Infusionsbeutel im medizinischen Bereich denkbar. Ein Vorteil einer derartigen Befestigung wäre, dass bereits bestehende Techniken auf einfache Weise zur Beimischung des Zusatzstoffes eingesetzt werden können.

Nachdem der Zusatzstoff, welcher sich in der Abgabevorrichtung 300 befindet, durch die zweite Materialleitung 52 in das Innere des Trogs 100 eingelaufen ist, wird dieser mit dem Mörtel 200 durchmischt. Bei Beendigung der Arbeitszeit bietet sich hier an, einen Retardierer zu verwenden, da dieser das Abbinden des Mörtels für mehrere Stunden verhindert, was dazu führt, dass der Mörtel am nächsten Morgen immer noch verwendbar ist. Zu diesem Zeitpunkt wird eine Abgabevorrichtung 300 mit einem Beschleuniger mit der zweiten Materialleitung 52 verbunden, so dass der Mörtel 200 eine derartige Konsistenz bekommt, dass er wieder eine für beispielsweise Wärmedämmverbundsysteme geeignete Abbindungszeit erhält.

In Fig. 3 ist eine besonders einfache Ausführung der erfindungsgemäßen Vorrichtung für ein System dargestellt. Zu sehen ist ein Trog 100 mit Mörtel 200, welcher eine Beschickungsöffnung 101 aufweist und bei dem zudem eine Fördervorrichtung 110, wie bereits in Fig. 2 beschrieben, vorhanden ist. Die erste Materialleitung 51 ist mit der Ausgabeöffnung 102 über eine Kupplung 510' verbunden. Bei Betrieb der Fördereinrichtung 110 wird der Mörtel 200 dem Pfeil M folgend zurück in den Trog 100 gepumpt und auf diese Weise ein Mörtelkreislauf hergestellt. Die Abgabevorrichtung 300 beinhaltet entweder, je nach Bedarf, einen Retardierer oder einen Beschleuniger. Dieser kann über die Öffnung 304 in Richtung des Pfeils Z direkt in den Mörtel abgegeben und mittels der ersten Materialleitung 51 gleichmäßig verteilt werden.

Es ist selbstverständlich möglich, anstatt einem Einwegbehälter auch andere, wiederverwendbare nachfüllbare Behältnisse als Abgabevorrichtung 300 zu verwenden. Es hat sich jedoch herausgestellt, dass Einwegbehälter aufgrund der verbesserten Handhabbarkeit zu bevorzugen sind.

Das erfindungsgemäße System kann auf unterschiedliche Weise betrieben werden. Hierbei kann die Abgabevorrichtung nach und nach den Zusatzstoff zum pastösen erstarrungsfähigen Baumaterial hinzugeben und abschließend für weitere Minuten oder Stunden der Pumpkreislauf mittels der ersten Materialleitung und der Fördervorrichtung aufrechterhalten werden. Später, wenn eine ausreichende Durchmischung erreicht ist, wird die Fördervorrichtung abgeschaltet. Das pastöse erstarrungsfähige Baumaterial ruht nun im Trog. Erst bei der nächsten Verwendung, welche am nächsten Morgen stattfinden kann (jedoch auch früher oder später), wird die Abgabevorrichtung ausgetauscht, wobei der Zusatzstoff in der Abgabevorrichtung diesmal ein Beschleuniger ist. Daraufhin wird der Beschleuniger, analog zum Retardierer, dem pastösen erstarrungsfähigen Baumaterial hinzugegeben, und nach ausreichender Durchmischung, wobei der Grad der Durchmischung vom Zusatzstoff und vom Baumaterial abhängig ist (die Kommentare zur Durchmischung gelten selbstredend auch beim Retardierer), kann das pastöse erstarrungsfähige Baumaterial wieder, beispielsweise für Wärmedämmverbundsysteme, eingesetzt werden. Der Deckel kann dabei über Nacht auf dem Trog sitzen, kann jedoch auch nach der ausreichenden Durchmischung mit einem Verzögerer bzw. Beschleuniger wieder abgenommen und in einem Schuppen verstaut und anschließend erneut aufgesetzt werden. Diese Betriebsabläufe sind unabhängig von der genauen Ausführung des Systems.

An dieser Stelle sei noch erwähnt, dass der Deckel mit der ersten und der zweiten Öffnung und der ersten und der zweiten Materialleitung sowie der Abgabevorrichtung für sich genommen eine eigenständige Erfindung darstellen kann. Der Trog ist lediglich mittelbar nötig, damit ein Abgabe- und Auffangbehältnis für das pastöse erstarrungsfähige Baumaterial vorliegt.

## Patentansprüche

1. System zur Aufnahme und Abgabe von pastösem, erstarrungsfähigen Baumaterial (200), welches einen Trog (100) mit einer Ausgabeöffnung (102) und einer Beschickungsöffnung (101) zum Befüllen des Trogs mit dem Baumaterial sowie eine Fördervorrichtung (110) zur Ausgabe des Baumaterials aus der Ausgabeöffnung umfasst, wobei die Beschickungsöffnung (101) mit einer Abgabevorrichtung (300) zur Abgabe eines Zusatzstoffs verbindbar ist,
wobei mindestens eine erste Materialleitung (51) vorhanden ist, welche ein ableitendes und ein zuleitendes Ende besitzt, und das ableitende Ende der ersten Materialleitung (51) mit der Ausgabeöffnung (102) lösbar verbunden ist und das zuleitende Ende der ersten Materialleitung (51) mit der Beschickungsöffnung (101) verbindbar ist, so dass die Fördereinrichtung das Baumaterial von der Ausgabeöffnung zur Beschickungsöffnung fördern kann, **dadurch gekennzeichnet, dass** die Vorrichtung ferner eine erste Abgabevorrichtung mit einem ersten Zusatzstoff, welcher ein Retardierer ist, und eine zweite Abgabevorrichtung mit einem zweiten Zusatzstoff, welcher ein Beschleuniger ist, umfasst und die erste und zweite Abgabevorrichtung alternierend mit der Beschickungsöffnung verbunden ist, wobei der Beschleuniger die Abbinde-Eigenschaften des Mörtel in den Zustand vor der Zugabe des Retardierers zurückversetzt.

2. System nach Anspruch 1, **dadurch gekennzeichnet, dass** eine zweite Materialleitung (52) vorhanden ist, welche ein ableitendes und ein zuleitendes Ende besitzt, und das ableitende Ende der zweiten Materialleitung (52) mit der ersten und zweiten Abgabevorrichtung (300) verbindbar ist und das zuleitende Ende der zweiten Materialleitung mit der Beschickungsöffnung (101) verbindbar ist.

3. System nach Anspruch 2, **dadurch gekennzeichnet, dass** die zweite Materialleitung (52) eine Dosierleitung mit einer Dosierpumpe (520) aufweist.

4. System nach einem der Ansprüche 2 oder 3, **dadurch gekennzeichnet, dass** die erste oder zweite Abgabevorrichtung (300) ein Einwegbehälter ist und mit der zweiten Materialleitung (52) lösbar verbunden ist.

5. System nach einem der Ansprüche 2 bis 4, **dadurch gekennzeichnet, dass** ein Deckel (60) zur Abdeckung der Beschickungsöffnung (101) vorhanden ist und der Deckel (60) lösbar mit dem Trog (100) verbunden ist, wobei der Deckel (60) mindestens eine erste (61) und eine zweite (62) Öffnung aufweist und das zuleitende Ende der ersten Materialleitung (51) über die erste Öffnung (61) und das zuleitende Ende der zweiten Materialleitung (52) über die zweite Öffnung (62) mit der Beschickungsöffnung (101) verbunden ist.

6. System nach Anspruch 5, **dadurch gekennzeichnet, dass** der Deckel (60) die Beschickungsöffnung (101) des Trogs (100) abdichtet (66,66').

7. System nach einem der vorhergehenden Ansprüche, **dadurch gekennzeichnet, dass** die erste Materialleitung eine Kupplung (510,510') aufweist oder mit einer Kupplung (510,510') verbindbar ist.

8. Verfahren zum Beimischen von ersten und zweiten Zusatzstoffen zu einem pastösem, erstarrungsfähigen Baumaterial (200), wobei das Baumaterial in einer Vorrichtung mit einem Trog (100) vorgehalten ist, wobei der Trog (100) eine Beschickungsöffnung (101) und eine Ausgabeöffnung (102) aufweist und der Trog (100) eine Fördervorrichtung (110) zur Ausgabe des Baumaterials aus der Ausgabeöffnung (102) umfasst, welches folgende Schritte beinhaltet:
a) Verbinden einer ersten Materialleitung (51) mit der Ausgabeöffnung (102) und der Beschickungsöffnung (101);
b) Betrieb der Fördervorrichtung (110) und Zugabe eines ersten Zusatzstoffes zum Baumaterial über die Beschickungsöffnung (101), wobei der Zusatzstoff ein Retardierer ist und das Baumaterial von der Ausgabeöffnung zur Beschickungsöffnung befördert wird;
c) Erneuter Betrieb der Fördervorrichtung (110) nach Beendigung der Zugabe des ersten Zusatzstoffs und Zugabe eines zweiten Zusatzstoffs zu dem mit dem ersten Zusatzstoff versehenen Baumaterial, wobei der zweite Zusatzstoff ein Beschleuniger ist, wobei der Beschleuniger die Abbinde-Eigenschaften des Mörtel in den Zustand vor der Zugabe des Retardierers zurückversetzt.

9. Verfahren nach Anspruch 8, **dadurch gekennzeichnet, dass** ein Deckel (60) mit mindestens einer ersten (61) und einer zweiten (62) Öffnung vorhanden ist, welcher vorzugsweise die Beschickungsöffnung (101) dichtend abdeckt, und die erste Materialleitung (51) über die erste Öffnung (61) mit der Beschickungsöffnung (101) verbunden wird und eine zweite Materialleitung (52) mit der zweiten Öffnung (62) und einer Abgabevorrichtung (300) verbunden wird.

10. Verfahren nach einem der Ansprüche 8 oder 9, **dadurch gekennzeichnet, dass** die zweite Materialleitung (52) eine Dosierleitung und eine Dosierpumpe (520) aufweist und die Zugabe des ersten und zweiten Zusatzstoffs durch die Dosierpumpe (520) gesteuert wird.

11. Verfahren nach einem der Ansprüche 8 bis 10, **dadurch gekennzeichnet, dass** die Abgabevorrichtung (300) ein Einwegbehälter ist und mit dem Retardierer oder dem Beschleuniger befüllt ist.

## Claims

1. A system for receiving and delivering pasty, settable construction material (200), comprising a trough (100) with a discharge opening (102) and a charging opening (101) for filling the trough with the construction material as well as a conveying device (110) for discharging the construction material from the discharge opening, wherein the charging opening (101) is connectable to a delivery device (300) for delivery of an additive, wherein there is present at least a first material line (51), which has a leading-away and a feeding end, and the leading-away end of the first material line (51) is detachably connected to the discharge opening (102) and the feeding end of the first material line (51) is connectable to the charging opening (101), so that the conveying device can convey the construction material from the discharge opening to the charging opening, **characterised in that** the device furthermore comprises a first delivery device with a first additive, a retarder, and a second delivery device with a second additive, an accelerator, and the first and second delivery device are alternately connected to the charging opening, wherein the accelerator restores the setting properties of the mortar to the state before the addition of the retarder.

2. A system according to claim 1, **characterised in that** there is present a second material line (52), which has a leading-away and a feeding end, and the leading-away end of the second material line (52) is connectable to the first and second delivery device (300) and the feeding end of the second material line is connectable to the charging opening (101).

3. A system according to claim 2, **characterised in that** the second material line (52) has a proportioning line with a proportioning pump (520).

4. A system according to one of claims 2 and 3, **characterised in that** the first or second delivery device (300) is a disposable container and is detachably connected to the second material line (52).

5. A system according to any one of claims 2 to 4, **characterised in that** a lid (60) to cover the charging opening (101) is present and the lid (60) is detachably connected to the trough (100), wherein the lid (60) has at least a first (61) and a second (62) opening and the feeding end of the first material line (51) is connected to the charging opening (101) via the first opening (61) and the feeding end of the second material line (52) is connected to the charging opening (101) via the second opening (62).

6. A system according to claim 5, **characterised in that** the lid (60) seals (66, 66') the charging opening (101) of the trough (100).

7. A system according to any one of the preceding claims, **characterised in that** the first material line has a coupling (510, 510') or is connectable to a coupling (510, 510').

8. A method of mixing first and second additives with a pasty, settable construction material (200), wherein the construction material is provided in a device with a trough (100), wherein the trough (100) has a charging opening (101) and a discharge opening (102) and the trough (100) comprises a conveying device (110) for discharging the construction material from the discharge opening (102), which method comprises the following steps:
a. Connection of a first material line (51) to the discharge opening (102) and to the charging opening (101);
b. Operation of the conveying device (110) and addition of a first additive to the construction material via the charging opening (101), wherein the additive is a retarder and the construction material is conveyed from the discharge opening to the charging opening;
c. Renewed operation of the conveying device (110) after completion of the addition of the first additive and addition of a second additive to the construction material provided with the first additive, wherein the second additive is an accelerator, wherein the accelerator restores the setting properties of the mortar to the state before the addition of the retarder.

9. A method according to claim 8, **characterised in that** a lid (60) with at least a first (61) and a second (62) opening is present, which lid preferably sealingly covers the charging opening (101), and the first material line (51) is connected to the charging opening (101) via the first opening (61) and a second material line (52) is connected to the second opening (62) and to a delivery device (300).

10. A method according to one of claims 8 and 9, **characterised in that** the second material line (52) has a proportioning line and a proportioning pump (520) and the addition of the first and second additive is controlled by the proportioning pump (520).

11. A method according to any one of claims 8 to 10, **characterised in that** the delivery device (300) is a disposable container and is filled with the retarder or the accelerator.

## Revendications

1. Système pour recevoir et décharger un matériau de construction (200) pâteux solidifiable, qui comprend une auge (100) avec une ouverture de délivrance (102) et une ouverture de chargement (101) pour remplir l'auge avec le matériau de construction, ainsi qu'un dispositif d'acheminement (110) pour délivrer le matériau de construction par l'ouverture de délivrance, dans lequel l'ouverture de chargement (101) peut être raccordée à un dispositif de déchargement (300) pour décharger un adjuvant,
dans lequel il existe au moins un premier conduit de matériau (51), qui possède une extrémité d'évacuation et une extrémité d'alimentation, et l'extrémité d'évacuation du premier conduit de matériau (51) est raccordée de manière amovible à l'ouverture de délivrance (102) et l'extrémité d'alimentation du premier conduit de matériau (51) est raccordable à l'ouverture de chargement (101), de sorte que le dispositif d'acheminement peut acheminer le matériau de construction de l'ouverture de délivrance jusqu'à l'ouverture de chargement, **caractérisé en ce que** le dispositif comprend en outre un premier dispositif de déchargement avec un premier adjuvant, qui est un retardateur, et un second dispositif de déchargement avec un second adjuvant, qui est un accélérateur, et le premier et le second dispositifs de déchargement sont raccordés en alternance à l'ouverture de chargement, dans lequel l'accélérateur ramène les propriétés de prise du mortier à l'état précédant l'addition du retardateur.

2. Système selon la revendication 1, **caractérisé en ce qu'**il existe un second conduit de matériau (52), qui possède une extrémité d'évacuation et une extrémité d'alimentation, et l'extrémité d'évacuation du second conduit de matériau (52) est raccordable aux premier et second dispositifs de déchargement (300) et l'extrémité d'alimentation du second conduit de matériau est raccordable à l'ouverture de chargement (101).

3. Système selon la revendication 2, **caractérisé en ce que** le second conduit de matériau (52) présente un conduit de dosage avec une pompe de dosage (520).

4. Système selon l'une quelconque des revendications 2 ou 3, **caractérisé en ce que** le premier ou le second dispositif de déchargement (300) est un récipient à usage unique et est raccordé de manière amovible au second conduit de matériau (52).

5. Système selon l'une quelconque des revendications 2 à 4, **caractérisé en ce qu'**il existe un couvercle (60) pour recouvrir l'ouverture de chargement (101) et le couvercle (60) est raccordé de manière amovible à l'auge (100), dans lequel le couvercle (60) présente au moins une première ouverture (61) et une seconde ouverture (62) et l'extrémité d'alimentation du premier conduit de matériau (51) est raccordée à l'ouverture de chargement (101) via la première ouverture (61), tandis que l'extrémité d'alimentation du second conduit de matériau (52) est raccordée à l'ouverture de chargement (101) via la seconde ouverture (62).

6. Système selon la revendication 5, **caractérisé en ce que** le couvercle (60) étanchéifie (66, 66') l'ouverture de chargement (101) de l'auge (100).

7. Système selon l'une quelconque des revendications précédentes, **caractérisé en ce que** le premier conduit de matériau présente un accouplement (510, 510') est raccordable à un accouplement (510, 510').

8. Procédé d'ajout de premiers et seconds adjuvants à un matériau de construction (200) pâteux solidifiable, dans lequel le matériau de construction est tenu à disposition dans un dispositif avec une auge (100), dans lequel l'auge (100) présente une ouverture de chargement (101) et une ouverture de délivrance (102) et l'auge (100) comprend un dispositif d'acheminement (110) pour délivrer le matériau de construction par l'ouverture de délivrance (102), qui comporte les étapes suivantes :
a) le raccordement d'un premier conduit de matériau (51) avec l'ouverture de délivrance (102) et l'ouverture de chargement (101) ;
b) le fonctionnement du dispositif d'acheminement (110) et l'addition d'un premier adjuvant au matériau de construction via l'ouverture de chargement (101), dans lequel l'adjuvant est un retardateur et le matériau de construction est acheminé de l'ouverture de délivrance jusqu'à l'ouverture de chargement ;
c) la remise en fonctionnement du dispositif d'acheminement (110) une fois terminée l'addition du premier adjuvant, et l'addition d'un second adjuvant au matériau de construction doté du premier adjuvant, dans lequel le second adjuvant est un accélérateur, dans lequel l'accélérateur ramène les propriétés de prise du mortier à l'état précédant l'addition du retardateur.

9. Procédé selon la revendication 8, **caractérisé en ce qu'**il existe un couvercle (60) avec au moins une première ouverture (61) et une seconde ouverture (62), qui de préférence recouvre de manière étanche l'ouverture de chargement (101), et le premier conduit de matériau (51) est raccordé via la première ouverture (61) à l'ouverture de chargement (101), et un second conduit de matériau (52) est raccordé à la seconde ouverture (62) et à un dispositif de déchargement (300).

10. Procédé selon l'une quelconque des revendications 8 ou 9, **caractérisé en ce que** le second conduit de matériau (52) présente un conduit de dosage et une pompe de dosage (520), et l'addition des premier et second adjuvants est commandée par la pompe de dosage (520).

11. Procédé selon l'une quelconque des revendications 8 à 10, **caractérisé en ce que** le dispositif de déchargement (300) est un récipient à usage unique et est rempli du retardateur ou de l'accélérateur.
